# EUROPEAN PATENT APPLICATION

(11) **EP 4 596 971 A1**
(43) Date of publication of application: **06.08.2025**
(21) Application number: 23888357.3
(22) Date of filing: 20.09.2023
(51) Int. Cl.: F23R 3/42, F02C 7/18, F23R 3/06

(54) **CYLINDRICAL BODY**

(30) Priority: 07.11.2022 JP 2022178095
(71) Applicant: Mitsubishi Heavy Industries Aero Engines, Ltd., Komaki-shi, Aichi 485-0826, (JP)
(72) Inventor: FUJIMOTO, Yohei, Komaki-shi, Aichi 485-0826 (JP); MIYOSHI, Ichiro, Komaki-shi, Aichi 485-0826 (JP); IKEDA, Yutaka, Komaki-shi, Aichi 485-0826 (JP)
(74) Representative: Studio Torta S.p.A.
(86) International application number: PCT/JP2023/034116
(87) International publication number: WO 2024/101004

(57) **Abstract**

Provided is a cylindrical body capable of avoiding an increase in weight while improving cooling efficiency. This cylindrical body (1) comprises a plurality of annular members (100), wherein: the annular member (100) each have an outer circumferential wall section (110), an inner circumferential wall section (120) which is disposed further inward than the outer circumferential wall section (110) and defines a cooling flow path (C3) between the inner circumferential wall section and the outer circumferential wall section (110), and a plurality of cooling fins (130) which are disposed in the cooling path (C3) and connect the other circumferential wall section (110) and the inner circumferential wall section (120); the outer circumferential wall section (110) has a plurality of inlet holes (111) which cause compressed air (F1) to be introduced from an intra-case flow path (C1) to the cooling path (C3); the inner circumferential wall section (120) has a plurality of outlet holes (121) which cause compressed air (F1) to be discharged from the cooling path (C3) to a combustion chamber (C2); and the plurality of annular members (100) are connected to each other along an axis X.

## Description

### Technical Field

The present disclosure relates to a cylindrical body such as a combustor.

### Background Art

In an aircraft engine or a combustor of a turbine, cooling may be performed using a part of compressed air.

In order to contribute to improvement in thermal efficiency, reduction in emission of harmful substances such as NOx, or improvement in component life, a combustor is required to have high cooling performance.

### Citation List

### Patent Literature

[PTL 1] United States Patent Application Publication No. 2020/0025379

### Summary of Invention

### Technical Problem

As one cooling method, there is an impingement-effusion method in which air is ejected from a micro cooling hole formed in an outside member toward an inside member (a cooling target), is caused to collide with the inside member, and is then ejected to a high-temperature flow path through the inside member. However, since the cooling holes are extremely small, there is a concern that the cooling holes may be clogged with dust contained in the air and lose the cooling function.

As one of other cooling methods, there is a pin fin method in which a plurality of pin fins are provided, and air flows through a flow path in which a plurality of inside members (cooling targets) equipped with the pin fins are mounted to a single cylindrical outside member. However, due to accuracy errors of the inside member and the outside member, a gap is generated between the pin fin and the outside member, and air may leak from the gap, which may reduce cooling efficiency.

In addition, PTL 1 discloses a technique of configuring one combustor (cylindrical body) by attaching a plurality of tile assemblies having a cooling structure to one common cylindrical liner with a fastener. However, in a method of attaching a plurality of tile assemblies to a cylindrical liner as in PTL 1, the weight increases by the number of fasteners.

The present disclosure has been made in view of such circumstances, and an object thereof is to provide a cylindrical body capable of eliminating an increase in weight while improving cooling efficiency.

### Solution to Problem

In order to solve the above problems, a cylindrical body of the present disclosure adopts the following means.

That is, according to an aspect of the present disclosure, there is provided a cylindrical body that extends along an axis, in which a first fluid flows in an outer side region and a second fluid having a higher temperature than the first fluid flows in an inner side region, the cylindrical body including: a plurality of annular members, in which each of the annular members includes an annular outer wall portion that is in contact with the outer side region, an annular inner wall portion that is in contact with the inner side region and is disposed inside the outer wall portion to define a flow path between the outer wall portion and the inner wall portion, and a plurality of cooling portions that are disposed in the flow path and connect the outer wall portion and the inner wall portion to each other, the outer wall portion includes a plurality of inlet holes through which the first fluid flows from the outer side region into the flow path, the inner wall portion includes a plurality of outlet holes through which the first fluid flows out from the flow path into the inner side region, and the cylindrical body is configured by the plurality of annular members connected to each other along the axis. Advantageous Effects of Invention

According to the present disclosure, it is possible to eliminate an increase in weight while improving cooling efficiency.

### Brief Description of Drawings

Fig. 1 is a cross-sectional view of a combustor according to an embodiment of the present disclosure.
Fig. 2 is a sectional view of an annular member (without a front connecting portion).
Fig. 3 is a sectional view of an annular member (with a front connecting portion).
Fig. 4 is a partially enlarged view of a portion A shown in Fig. 1.
Fig. 5 is a plan view as seen in a direction of an arrow B shown in Fig. 4.
Fig. 6 is a cross-sectional view taken along a cutting line VI-VI shown in Fig. 4.
Fig. 7 is an enlarged cross-sectional view of a vicinity of a connecting portion between two annular members having engaging part.
Fig. 8 is a plan view as seen in a direction of an arrow C shown in Fig. 7.
Fig. 9 is a plan view showing a state of an engagement work.
Fig. 10 is a cross-sectional view of an annular member according to a modification example.

### Description of Embodiments

Hereinafter, an embodiment of a cylindrical body according to the present disclosure will be described with reference to the drawings.

In the cylindrical body according to the present embodiment, a first fluid flows in a region on an outer side, and a second fluid having a higher temperature than the first fluid flows in a region on an inner side.

Hereinafter, a combustor of an aircraft engine will be described as an example, but the cylindrical body according to the present embodiment is not limited to the combustor of an aircraft engine.

### [Regarding Structure of Combustor]

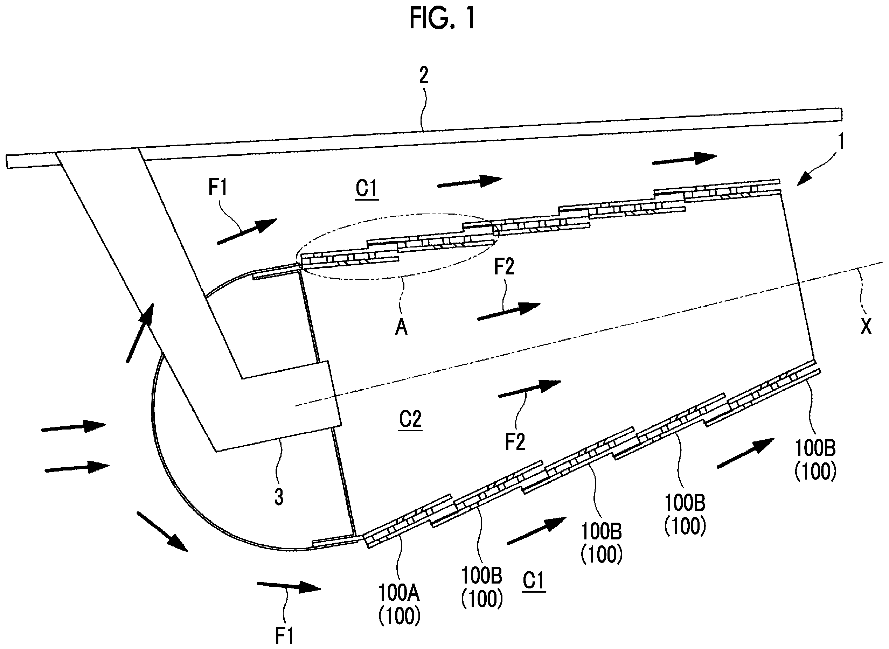

As shown in Fig. 1, the combustor 1 is a device that is disposed in an in-casing flow path C1 in a casing 2 through which compressed air F1 (first fluid) flows, and defines a combustion chamber C2 that generates a high-temperature combustion gas F2 (second fluid) for rotating a turbine by mixing and combusting a fuel blown from a fuel nozzle 3 and the compressed air F1.

The combustor 1 is applied to, for example, a turbofan engine mounted on an aircraft.

The temperature of the compressed air F1 is, for example, about 200°C to 800°C. The temperature of the combustion gas F2 is, for example, 1000°C to 1700°C. The temperatures are merely examples and may vary depending on operating conditions and specifications of the engine.

The combustor 1 has a cylindrical shape as a whole along an axis X, and the compressed air F1 flows in a region on an outer side (outer side region), and the combustion gas F2 flows in a region on an inner side (inner side region). That is, the outer side region corresponds to the in-casing flow path C1, and the inner side region corresponds to the combustion chamber C2.

The fuel nozzle 3 for blowing a fuel into the combustion chamber C2 is connected to a portion of the combustor 1 located upstream of the flow of the compressed air F1.

The combustor 1 includes a plurality of annular members 100, and the annular members 100 are connected along the axis X to form one cylindrical body.

In the case of Fig. 1, one combustor 1 is configured by connecting five annular members 100 along the axis X. However, the number of annular members 100 is not limited thereto.

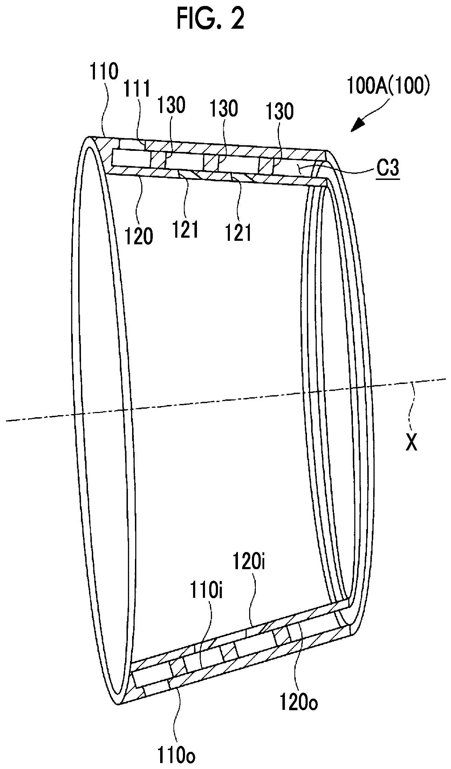

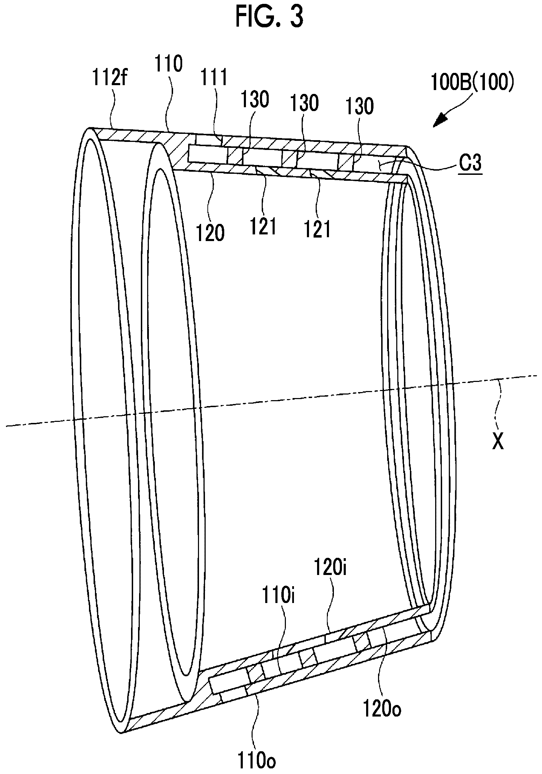

The annular member 100 includes an annular member 100A (refer to Fig. 2) and an annular member 100B (refer to Fig. 3).

The annular member 100A is an annular member 100 located on a front side of the combustor 1 (upstream in a flow direction of the compressed air F1), and the annular member 100B is an annular member 100 following the annular member 100A (downstream in the flow direction of the compressed air F1).

As shown in Figs. 2 and 3, the structures of the annular member 100A and the annular member 100B are substantially the same except for a shape of an outer wall portion 110 (specifically, the presence or absence of a front connecting portion 112f). Therefore, first, the annular member 100A will be described, and then the annular member 100B will be described mainly with respect to the differences from the annular member 100A.

In the following description, in a case where the annular member 100A and the annular member 100B are not distinguished from each other, the annular member 100A and the annular member 100B may be simply described as the "annular member 100".

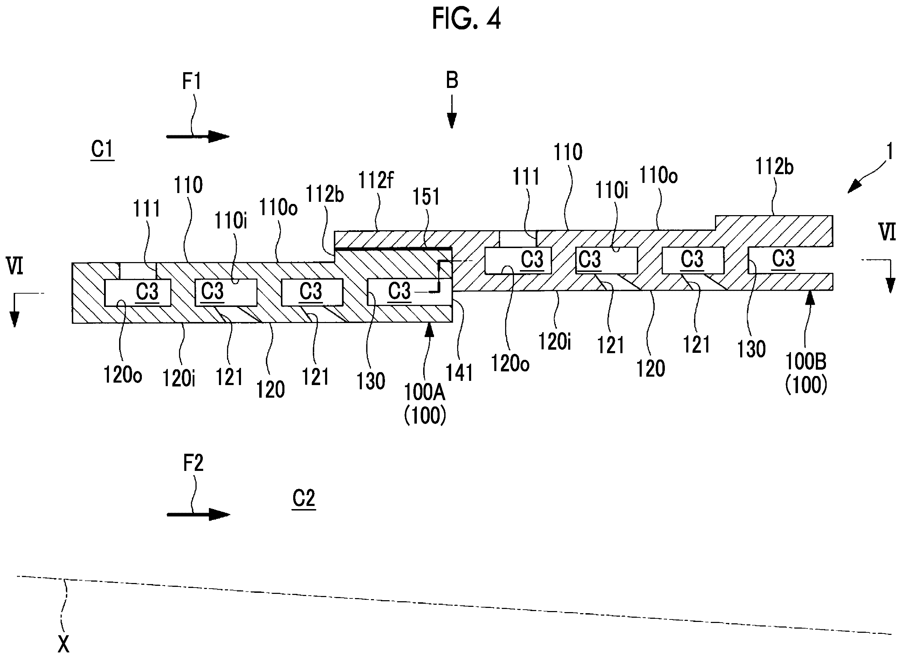

As shown in Figs. 2 and 4, the annular member 100A is a double annular member with a diameter gradually decreases toward the rear side, and includes an outer wall portion 110, an inner wall portion 120, and a plurality of cooling pin-fins 130 (cooling portions).

The outer wall portion 110 is a single annular portion centered around the axis X. The outer wall portion 110 is, for example, not divided in a circumferential direction.

The outer wall portion 110 has an inner surface 110i and an outer surface 110o. The inner surface 110i faces the inner wall portion 120. The outer surface 110o faces the in-casing flow path C1 and is exposed to the compressed air F1.

As shown in Fig. 4, a rear connecting portion 112b is formed in a part including a rear end portion of the outer wall portion 110. The rear connecting portion 112b is a portion in which a diameter of the outer surface 110o has been increased, and is used for connection to an annular member 100B to be described later.

As shown in Figs. 2 and 4, the inner wall portion 120 is a single annular shape substantially centered around the axis X, and is a portion having a smaller diameter than the outer wall portion 110. The inner wall portion 120 is, for example, not divided in the circumferential direction.

The inner wall portion 120 is disposed to be substantially coaxial with the outer wall portion 110 inside the outer wall portion 110. That is, the inner wall portion 120 and the outer wall portion 110 together form a double pipe.

The inner wall portion 120 has an inner surface 120i and an outer surface 120o. The inner surface 120i faces the combustion chamber C2 and is exposed to the combustion gas F2. The outer surface 120o faces the outer wall portion 110.

As described above, the outer wall portion 110 and the inner wall portion 120 form a double pipe, and a gap defined between the outer wall portion 110 and the inner wall portion 120 is a cooling flow path C3.

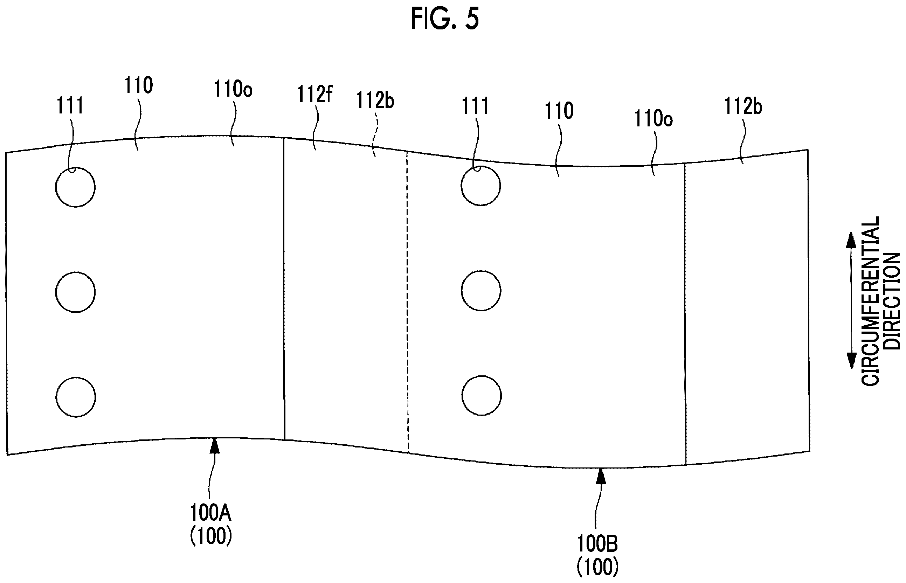

As shown in Figs. 4 and 5, the outer wall portion 110 has a plurality of inlet holes 111 penetrating the inner surface 110i and the outer surface 110o. The inlet holes 111 are provided in one row in front of the cooling flow path C3. The inlet holes 111 in one row are provided at predetermined angular intervals around the axis X in the circumferential direction.

The inlet hole 111 has a size (for example, a size larger than a size of a microhole of the impingement-effusion method) to such an extent that the inlet hole 111 is not clogged with dust contained in the air, and has, for example, a diameter of about 1 mm to 3 mm.

The inlet hole 111 allows the in-casing flow path C1 and the cooling flow path C3 to communicate with each other, and guides the compressed air F1 to the cooling flow path C3 as cooling air.

The number of rows of the inlet holes 111 is not limited to one row, and may be two or more rows.

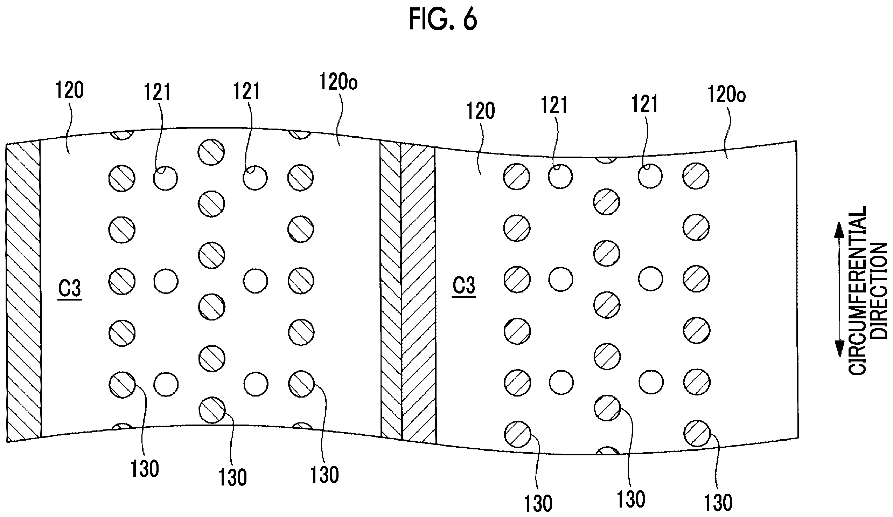

As shown in Figs. 4 and 6, the inner wall portion 120 has a plurality of outlet holes 121 penetrating the inner surface 120i and the outer surface 120o. The outlet holes 121 are provided in a plurality of rows behind the inlet holes 111. The outlet holes 121 in each row are provided at predetermined angular intervals around the axis X in the circumferential direction.

The outlet hole 121 is smaller than the inlet hole 111 (for example, the size is substantially the same as the size of the microhole of the impingement-effusion method).

The outlet hole 121 allows the cooling flow path C3 and the combustion chamber C2 to communicate with each other, and allows the cooling air guided to the cooling flow path C3 to flow out to the combustion chamber C2.

A plurality of cooling pin-fins 130 are disposed in the cooling flow path C3.

The cooling pin-fin 130 is a portion that connects the inner surface 110i of the outer wall portion 110 and the outer surface 120o of the inner wall portion 120, and has, for example, a columnar shape (refer to Fig. 6).

As shown in Fig. 6, the plurality of cooling pin-fins 130 are disposed to spread on a curved surface along the inner wall portion 120 in the cooling flow path C3.

In Fig. 4, the cooling pin-fin 130 appears to divide the cooling flow path C3; however, in reality, there is a space at the front and rear in Fig. 4 where no cooling pin-fin 130 is provided, and this space constitutes the cooling flow path C3 (see Fig. 6). That is, as shown in Fig. 6, the cylindrical cooling pin-fins 130 are disposed to be separated from each other.

As shown in Figs. 3 and 4, as in the annular member 100A, the annular member 100B includes the outer wall portion 110, the inner wall portion 120, and the plurality of cooling pin-fins 130 (cooling portions).

As shown in Fig. 4, the front connecting portion 112f is formed in a part including a front end portion of the outer wall portion 110.

The front connecting portion 112f is a portion in which the outer wall portion 110 protrudes forward from the inner wall portion 120 in a direction of the axis X, and is used for connection to the annular member 100A or the annular member 100B located in front.

In the annular member 100A and the annular member 100B, the outer wall portion 110, the inner wall portion 120, and the plurality of cooling pin-fins 130 are integrally formed without using a fastener. For example, the annular member 100 is formed of one member including the outer wall portion 110, the inner wall portion 120, and the plurality of cooling pin-fins 130.

The annular member 100 in which the respective parts are integrated is manufactured by, for example, additive manufacturing (AM) such as 3D printing.

As a material of the annular member 100 in which the respective parts are integrated, a superalloy containing nickel is exemplified.

As described above, the annular member 100A and the annular member 100B are connected to each other along the axis X as shown in Fig. 4.

Specifically, the inner surface 110i of the front connecting portion 112f of the annular member 100 (annular member 100B) on a rear side is inserted and connected to the outer surface 110o of the rear connecting portion 112b of the annular member 100 (annular member 100A) on a front side.

A method for connection not using a fastener such as a bolt and nut is preferable, and a shrink-fitting such as thermal shrink fit is exemplified. In addition, the components may be engaged by welding, brazing, or the like. In this case, a connected part 151 is formed at a boundary between the rear connecting portion 112b and the front connecting portion 112f.

It goes without saying that an outer diameter of the outer surface 110o of the rear connecting portion 112b and an inner diameter of the inner surface 110i of the front connecting portion 112f are appropriately set according to connecting means.

In a state in which the plurality of annular members 100 are connected to each other along the axis X, a rear end of the cooling flow path C3 of the annular member 100 (annular member 100A) on a front side is open toward the inner surface 120i of the inner wall portion 120 of the annular member 100 (annular member 100B) on a rear side. That is, the cooling flow path C3 has an opening 141 facing the inner surface 120i of the inner wall portion 120.

With this configuration, the cooling air has flowed out from the opening 141 of the cooling flow path C3 of the annular member 100A flows along the inner surface 120i of the inner wall portion 120 of the annular member 100B.

### [Regarding Flow of Cooling Air]

The compressed air F1 flowing through the in-casing flow path C1 is guided to the cooling flow path C3 as cooling air from the inlet hole 111 of the outer wall portion 110 of the annular member 100.

The cooling air guided to the cooling flow path C3 flows through the cooling flow path C3 while colliding with the cooling pin-fin 130.

At this time, the cooling pin-fin 130 is exposed to the flow of the cooling air, so that the heat of the inner wall portion 120 connected to the cooling pin-fin 130 is taken away by the cooling air. In this way, the combustor 1 (particularly, the inner wall portion 120 exposed to a high temperature) is cooled.

In addition, since the cooling pin-fin 130, the outer wall portion 110, and the inner wall portion 120 are integrally formed as a single member, for example, cooling air does not leak from a gap between the cooling pin-fin 130 and the outer wall portion 110. Therefore, the compressed air F1 comes into contact with the cooling pin-fin 130 over a wide area, and thus the cooling efficiency of the inner wall portion 120 by the cooling pin-fin 130 can be improved.

The cooling air guided to the cooling flow path C3 flows out from the outlet holes 121 and the opening 141 of the inner wall portion 120 of the annular member 100 to the combustion chamber C2.

In this case, the cooling air that has flowed out from the outlet holes 121 and the opening 141 flows along the inner surface 120i of the inner wall portion 120 to form a thin air layer. Film-cooling of the inner wall portion 120 is performed by the air layer.

By adjusting a flow path area of each outlet hole 121 and/or a flow path area of the opening 141, it is possible to control a flow rate of the compressed air F1 flowing into the cooling flow path C3 from each inlet hole 111.

In addition, by adjusting the flow path area of each outlet hole 121 and/or the flow path area of the opening 141, it is also possible to control a ratio between a total amount of cooling air flowing out from each outlet hole 121 and a total amount of cooling air flowing out from the opening 141.

### [Regarding Engaging Part]

In the combustor 1 described above, the annular member 100 in a front side and the annular member 100 in a rear side are connected to each other by shrink-fitting, welding, brazing, or the like.

In addition to these connection methods, the combustor 1 of the present embodiment may be provided with elements (engaging parts) that mechanically engage with the annular members 100 on a front side and the annular members 100 on a rear side.

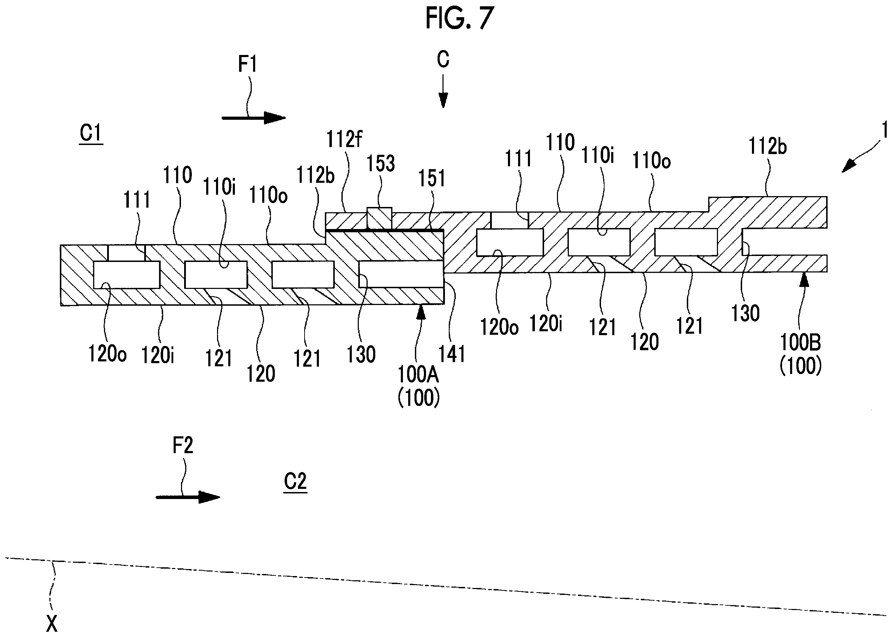

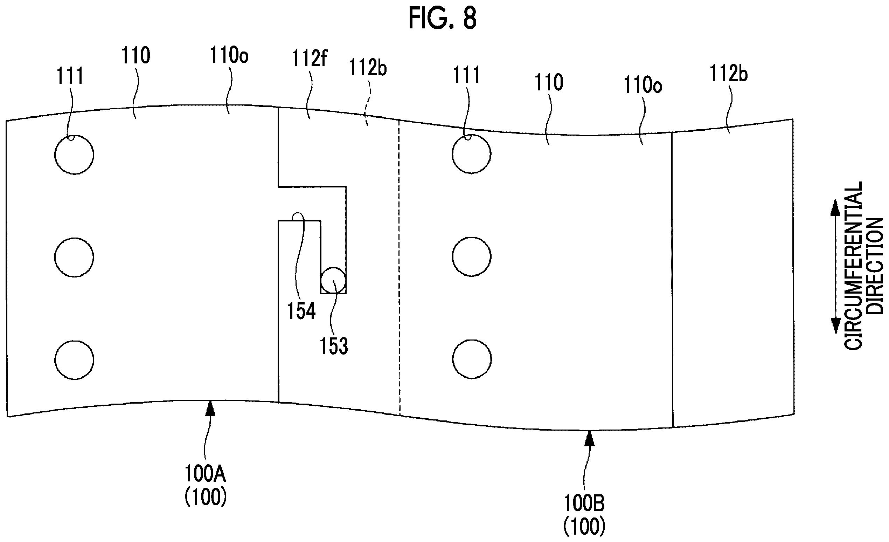

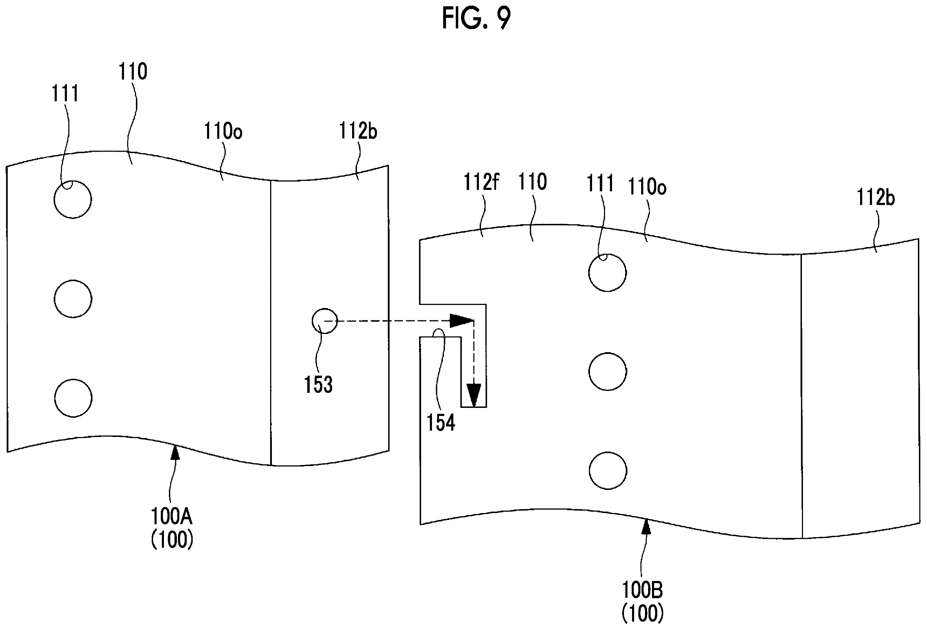

For example, as shown in Figs. 7 to 9, a protrusion 153 may be provided on the outer surface 110o of the rear connecting portion 112b, and a notch route 154 in which the protrusion 153 is hooked may be provided in the front connecting portion 112f. **In** this way, the annular member 100 on a front side and the annular member 100 on a rear side are mechanically hooked, and it is possible to avoid the annular members 100 from being deviated in the direction of the axis X.

### [Regarding Heat-Shielding Layer]

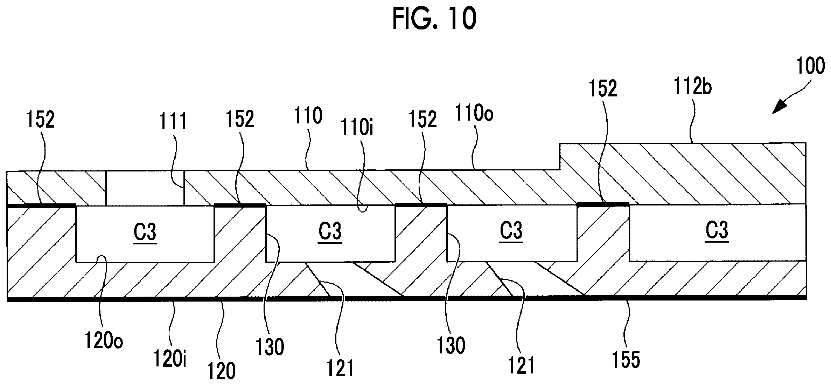

As shown in Fig. 10, a heat-shielding layer 155 may be formed on the inner surface 120i of the inner wall portion 120 that is exposed to the highest temperature.

The heat-shielding layer 155 is not particularly limited as long as the heat-shielding layer 155 improves the heat-shielding performance of the inner surface 120i, and examples thereof include a thermal barrier coating in which yittria-stabilized zirconia (YSZ) is applied.

### [Modification Example of Annular Member]

The annular member 100 may be integrally formed of the outer wall portion 110, inner wall portion 120, and the plurality of cooling pin-fins 130 without using a fastener, and does not necessarily need to be formed as a single member.

For example, as shown in Fig. 10, the outer wall portion 110 and the inner wall portion 120 including the cooling pin-fin 130 may be formed of different members, and then the outer wall portion 110 and the inner wall portion 120 may be integrated by welding or brazing. In this way, the material of the outer wall portion 110 and the material of the inner wall portion 120 (which includes the cooling pin-fin 130) can be made different from each other. At this time, the connected part 152 is formed at the boundary between the outer wall portion 110 and the inner wall portion 120 including the cooling pin-fin 130. Examples of the material for the outer wall portion 110 include a nickel-based superalloy. In addition, examples of the material for the inner wall portion 120 include, a material having higher heat resistance than the outer wall portion 110 (for example, a high-temperature-resistant nickel-based superalloy containing a large amount of rare earth such as cobalt).

Each part is manufactured by, for example, additive manufacturing (AM) such as 3D printing.

### [Modification Example of Cooling pin-fin]

The cooling pin-fin 130 is not limited to a columnar shape as long as the cooling pin-fin 130 has a shape that allows heat to be efficiently taken away by the cooling air, for example, the shape may be prismatic or plate-shaped.

The present embodiment has the following effects.

The plurality of annular members 100 is provided, in which each annular member 100 includes the annular outer wall portion 110 that is in contact with the in-casing flow path C1, the annular inner wall portion 120 that is in contact with the combustion chamber C2 and is disposed inside the outer wall portion 110 to define the cooling flow path C3 between the outer wall portion 110 and the inner wall portion 120, and the plurality of cooling pin-fins 130 that are disposed in the cooling flow path C3 and connect the outer wall portion 110 and the inner wall portion 120 to each other, the outer wall portion 110 has the plurality of inlet holes 111 through which the compressed air F1 flows from the in-casing flow path C1 into the cooling flow path C3, and the inner wall portion 120 has the plurality of outlet holes 121 through which the compressed air F1 flows from the cooling flow path C3 into the combustion chamber C2. Therefore, the compressed air F1 having a temperature lower than that of the combustion gas F2 is taken into the cooling flow path C3 from the inlet holes 111 and is discharged from the outlet holes 121. In this manner, the flow of the compressed air F1 is generated in the cooling flow path C3, and the cooling pin-fins 130 are exposed to the flow of the compressed air F1, and thus, the annular member 100 (particularly, the inner wall portion 120 that is in contact with the high-temperature combustion chamber C2) can be cooled. In this case, since the cooling pin-fin 130 connects the outer wall portion 110 and the inner wall portion 120 (that is, there is no gap between the outer wall portion 110 and the inner wall portion 120), the compressed air F1 as a cooling fluid does not leak from the gap between the outer wall portion 110 and the cooling pin-fin 130. Therefore, the compressed air F1 comes into contact with the cooling pin-fin 130 over a wide area, and thus the cooling efficiency of the inner wall portion 120 by the cooling pin-fin 130 can be improved.

In addition, since the outer wall portion 110, the inner wall portion 120, and the cooling pin-fin 130 are configured as one annular member 100, each portion can be integrated without using a fastener. Therefore, an increase in weight due to the fastening part can be eliminated. In addition, for example, it is possible to avoid damage to the device caused by a part of the fastener coming off.

In addition, since the combustor 1 is configured by connecting the plurality of annular members 100 to each other along the axis X, it is not necessary to hold each of the annular members 100 with a common cylindrical member (liner) in order to configure the combustor 1, and an increase in weight due to a fastener for holding the cylindrical member or the annular member 100 to the cylindrical member can be eliminated. In addition, for example, it is possible to avoid damage to the device caused by a part of the fastener coming off.

In addition, since the rear end of the cooling flow path C3 of the annular member 100 on a front side is open toward the inner wall portion 120 of the annular member 100 on a rear side, the compressed air F1 flowing out from the opening 141 can flow along the inner wall portion 120 of the annular member 100. Therefore, the inner wall portion 120 of the annular member 100 can be film-cooled.

In addition, even when one annular member 100 among the plurality of annular members 100 connected to each other along the axis X is damaged, it is possible to replace the damaged annular member 100 only.

In addition, the outer wall portion 110 of the annular member 100 on a front side and the outer wall portion 110 of the annular member 100 on a rear side are connected to each other by shrink-fitting, welding, or brazing. Therefore, the annular members 100 can be connected to each other without using a fastener. Therefore, an increase in weight due to the fastening part can be eliminated. In addition, for example, it is possible to avoid damage to the device caused by a part of the fastener coming off.

In addition, in a case where the engaging parts (protrusion 153 and notch route 154) are provided, it is possible to reduce a probability that the annular members 100 are separated from each other in the direction of the axis X.

In addition, in a case where the outer wall portion 110, the inner wall portion 120, and the cooling pin-fin 130 are integrally formed as a single member, the annular member 100 can be easily manufactured and handled.

In addition, in a case where the outer wall portion 110 and the inner wall portion 120 are formed of different materials, for example, the inner wall portion 120 can be formed of a material having higher heat resistance than the outer wall portion 110, and thus the materials can be selectively used according to the temperature range.

In addition, in a case where the heat-shielding layer 155 is formed on the inner surface 120i of the inner wall portion 120, the heat resistance of the inner wall portion 120 can be further improved.

The cylindrical body according to the present embodiment described above is understood as follows, for example.

That is, a cylindrical body (1) according to a first aspect of the present disclosure is a cylindrical body that extends along an axis (X), in which a first fluid (F1) flows in an outer side region (C1) and a second fluid (F2) having a higher temperature than the first fluid flows in an inner side region (C2), the cylindrical body including: a plurality of annular members (100), in which each of the annular members includes an annular outer wall portion (110) that is in contact with the outer side region, an annular inner wall portion (120) that is in contact with the inner side region and is disposed inside the outer wall portion to define a flow path (C3) between the outer wall portion and the inner wall portion, and a plurality of cooling portions (130) that are disposed in the flow path and connect the outer wall portion and the inner wall portion to each other, the outer wall portion includes a plurality of inlet holes (111) through which the first fluid flows from the outer side region into the flow path, the inner wall portion includes a plurality of outlet holes (121) through which the first fluid flows out from the flow path into the inner side region, and the cylindrical body is configured by the plurality of annular members connected to each other along the axis.

According to the cylindrical body of the present aspect, the plurality of annular members is provided, in which each annular member includes the annular outer wall portion that is in contact with an outer side region, the annular inner wall portion that is in contact with an inner side region and is disposed inside the outer wall portion to define the flow path between the outer wall portion and the inner wall portion, and the plurality of cooling portions that are disposed in the flow path and connect the outer wall portion and the inner wall portion to each other, the outer wall portion has the plurality of inlet holes through which the first fluid flows from the outer side region into the flow path, and the inner wall portion has the plurality of outlet holes through which the first fluid flows from the flow path into the inner side region. Therefore, the first fluid having a temperature lower than that of the second fluid is taken into the flow path from the inlet holes and is discharged from the outlet holes. In this manner, the flow of the first fluid is generated in the flow path, and the cooling portions are exposed to the flow of the first fluid, and thus, the annular member (particularly, the inner wall portion that is in contact with the high-temperature second fluid) can be cooled. In this case, since the cooling portion connects the outer wall portion and the inner wall portion (that is, there is no gap between the outer wall portion and the inner wall portion), the first fluid as the cooling fluid does not leak from the gap between the outer wall portion and the cooling portion. Therefore, since the first fluid comes into contact with the cooling portion over a wide area, the cooling efficiency of the cooling portion with respect to the inner wall portion can be improved.

In addition, since the outer wall portion, the inner wall portion, and the cooling portion are configured as a single annular member, each portion can be integrated without using a fastener. Therefore, an increase in weight due to the fastening part can be eliminated. In addition, for example, it is possible to avoid damage to the device caused by a part of the fastener coming off.

In addition, since the plurality of annular members are connected to each other along the axis to configure the cylindrical body, it is not necessary to hold each annular member with a common cylindrical member (liner) to configure the cylindrical body, and it is possible to eliminate an increase in weight due to a fastener for holding the cylindrical member or the annular member to the cylindrical member. In addition, for example, it is possible to avoid damage to the device caused by a part of the fastener coming off.

In addition, even when one annular member among the plurality of annular members connected to each other along the axis X is damaged, it is possible to replace the damaged annular member only.

In addition, in the cylindrical body according to the second aspect of the present disclosure, in the first aspect, a rear end of the flow path of a first annular member is open toward the inner wall portion of a second annular member.

According to the cylindrical body of the present aspect, since the opening is open toward the inner wall portion of the second annular member, the first fluid flowing out from the opening (141) at the rear end of the flow path of the first annular member can flow along the inner wall portion of the second annular member. Therefore, the inner wall portion of the second annular member can be film-cooled.

In addition, in the cylindrical body according to the third aspect of the present disclosure, in the first aspect or the second aspect, the outer wall portion of a first annular member and the outer wall portion of a second annular member are connected to each other by shrink-fitting, welding, or brazing.

According to the cylindrical body of the present aspect, since the outer wall portion of the first annular member and the outer wall portion of the second annular member are connected to each other by shrink-fitting, welding, or brazing, the annular members can be connected to each other without using a fastener. Therefore, an increase in weight due to the fastening part can be eliminated. In addition, for example, it is possible to avoid damage to the device caused by a part of the fastener coming off.

In addition, in the cylindrical body according to the fourth aspect of the present disclosure, in the third aspect, engaging parts (153, 154) that prevent the first annular member and the second annular member from being separated in a direction of the axis are provided in the outer wall portion of the first annular member and the outer wall portion of the second annular member.

According to the cylindrical body of the present aspect, since the engaging parts for preventing the first annular member and the second annular member from being separated from each other in the direction of the axis are provided in the outer wall portion of the first annular member and the outer wall portion of the second annular member, a probability that the annular members are separated from each other in the direction of the axis can be reduced.

**In** addition, in the cylindrical body according to the fifth aspect of the present disclosure, in any one of the first to fourth aspects, the outer wall portion, the inner wall portion, and the cooling portion are integrally formed as a single member.

According to the cylindrical body in the present aspect, since the outer wall portion, the inner wall portion, and the cooling portion are integrally formed as a single member, it becomes easy to manufacture and handle the annular member.

In addition, in the cylindrical body according to the sixth aspect of the present disclosure, in any one of the first to fourth aspects, the outer wall portion and the inner wall portion are formed of different materials.

According to the cylindrical body in the present aspect, since the outer wall portion and the inner wall portion are formed of different materials, it is possible to use different materials according to a temperature range, for example, by using a material having higher heat resistance for the inner wall portion than for the outer wall portion.

**In** addition, in the cylindrical body according to the seventh aspect of the present disclosure, in any one of the first to sixth aspects, a heat-shielding layer 155 is formed on an inner surface of the inner wall portion.

According to the cylindrical body of the present aspect, since the heat-shielding layer is formed on the inner surface of the inner wall portion, the heat resistance of the inner wall portion can be further improved.

**In** addition, in the cylindrical body according to the eighth aspect of the present disclosure, the cylindrical body is a combustor in any one of the first aspect to the seventh aspect.

According to the cylindrical body in the present aspect, since the cylindrical body is a combustor of an aircraft engine, the cooling of the combustor in which air flows in the outer side region and a high-temperature combustion gas flows in the inner side region can be performed.

### Reference Signs List

1: combustor (cylindrical body)
2: casing
3: fuel nozzle
100 (100A, 100B): annular member
110: outer wall portion
110i: inner surface
110o: outer surface
111: inlet hole
112b: rear connecting portion
112f: front connecting portion
120: inner wall portion
120i: inner surface
120o: outer surface
121: outlet hole
130: cooling pin-fin (cooling portion)
141: opening
151: connected part
152: connected part
153: protrusion
154: notch route
155: heat-shielding layer
C1: in-casing flow path (outer side region)
C2: combustion chamber (inner side region)
C3: cooling flow path (flow path)
X: axis

## Claims

1. A cylindrical body that extends along an axis, in which a first fluid flows in an outer side region and a second fluid having a higher temperature than the first fluid flows in an inner side region, the cylindrical body comprising:
a plurality of annular members,
wherein each of the annular members includes
an annular outer wall portion that is in contact with the outer side region,
an annular inner wall portion that is in contact with the inner side region and is disposed inside the outer wall portion to define a flow path between the outer wall portion and the inner wall portion, and
a plurality of cooling portions that are disposed in the flow path and connect the outer wall portion and the inner wall portion to each other,
the outer wall portion includes a plurality of inlet holes through which the first fluid flows from the outer side region into the flow path,
the inner wall portion includes a plurality of outlet holes through which the first fluid flows out from the flow path into the inner side region, and
the cylindrical body is configured by the plurality of annular members connected to each other along the axis.

2. The cylindrical body according to Claim 1,
wherein a rear end of the flow path of a first annular member is open toward the inner wall portion of a second annular member.

3. The cylindrical body according to Claim 1,
wherein the outer wall portion of a first annular member and the outer wall portion of a second annular member are connected to each other by shrink-fitting, welding, or brazing.

4. The cylindrical body according to Claim 3,
wherein engaging parts that prevent the first annular member and the second annular member from being separated in a direction of the axis are provided in the outer wall portion of the first annular member and the outer wall portion of the second annular member.

5. The cylindrical body according to Claim 1,
wherein the outer wall portion, the inner wall portion, and the cooling portion are integrally formed as a single member.

6. The cylindrical body according to Claim 1,
wherein the outer wall portion and the inner wall portion are formed of different materials.

7. The cylindrical body according to Claim 1,
wherein a heat-shielding layer is formed on an inner surface of the inner wall portion.

8. The cylindrical body according to Claim 1, which is a combustor.
